# EUROPÄISCHE PATENTANMELDUNG

(11) **EP 3 441 590 A1**
(43) Veröffentlichungstag der Anmeldung: **13.02.2019**
(21) Anmeldenummer: 17001364.3
(22) Anmeldetag: 08.08.2017
(51) Int. Cl.: F02B 43/10, F02M 25/10, F02D 21/02

(54) **VERFAHREN ZUM BETRIEB EINES VERBRENNUNGSMOTORS UND VERBRENNUNGSMOTOR**

(71) Anmelder: Miosga-Molière, Georg, 13465 Berlin (DE)
(72) Erfinder: Miosga-Molière, Georg, 13465 Berlin (DE)

(57) **Zusammenfassung**

Die Erfindung betrifft ein Verfahren zum Betrieb eines Verbrennungsmotors (1), wobei in einem Brennraum (100) eines Verbrennungsmotors (1) ein Gemisch zwischen einem Kraftstoff (K) und einem Verbrennungsfluid (V) zur Verfügung gestellt wird, wobei der Kraftstoff (K) eine Kohlenstoffverbindung aufweist, und wobei das Gemisch in dem Brennraum (100) gezündet wird, so dass der Kraftstoff (K) zumindest teilweise verbrennt, und wobei der Verbrennungsmotor (1) durch bei der Verbrennung des Kraftstoffs (K) freigesetzte Energie angetrieben wird, und wobei das Verbrennungsfluid (V) 70 Vol.-% Stickstoff (N₂) oder weniger aufweist.

Weiterhin betrifft die Erfindung einen Verbrennungsmotor (1), der mittels des erfindungsgemäßen Verfahrens betreibbar ist.

## Beschreibung

Die Erfindung betrifft ein Verfahren zum Betrieb eines Verbrennungsmotors sowie einen Verbrennungsmotor, insbesondere mit reduzierter Stickoxidemission.

Verbrennungsmotoren nach dem Stand der Technik, z. B. Dieselmotoren oder Ottomotoren, verbrennen Kraftstoffe, z.B. Diesel- oder Ottokraftstoff, Methan oder vergleichbare fossile oder synthetisch erzeugte Brennstoffe in einem Brennraum (z.B. einem Zylinder) und wandeln die beim Verbrennungsprozess freigesetzte chemische Energie des Kraftstoffs in Bewegungsenergie um, z.B. durch Versetzen einer Antriebswelle in Drehbewegung. Als Oxidationsmittel, welches den Kraftstoff beim Verbrennungsprozess oxidiert, wird nach dem Stand der Technik Luft verwendet, die z.B. aus der Umgebung des Verbrennungsmotors angesaugt wird.

Dies hat jedoch den Nachteil, dass aufgrund von Nebenreaktionen während des Verbrennungsprozesses oder in einem Abgasstrom durch den in der Luft vorhandenen Stickstoff gesundheits- und umweltschädliche Stickoxide wie z.B. Stickstoffdioxid (NO₂) gebildet werden, die mit den Abgasen in die Umgebung gelangen. Diese Stickoxide entstehen z.B. durch eine sogenannte Dissoziationsreaktion von Abgasbestandteilen bei hoher Abgastemperatur. Dabei produzieren insbesondere Dieselmotoren Abgase mit hohen Stickoxidkonzentrationen, was zu einer immer größeren Ablehnung des Dieselmotors in der öffentlichen Diskussion geführt hat.

Nach dem Stand der Technik sind verschiedene Verfahren zur Reduzierung des Stickoxidgehalts von Abgasen bekannt. So existieren z.B. Systeme zur Rückführung von Abgasen in den Brennraum. Diese haben jedoch den Nachteil, dass insbesondere bei Dieselmotoren die Partikelemission durch die Abgasrückführung erhöht wird.

Weiterhin sind Verfahren zur selektiven katalytischen Reduktion bekannt, bei denen dem Abgasstrom Ammoniak zugesetzt wird (insbesondere durch Zugabe einer wässrigen Harnstofflösung, welche durch Hydrolyse in Ammoniak und CO₂ zerfällt), wobei die Stickoxide in dem Abgasstrom durch den Ammoniak chemisch reduziert werden. Dies erfordert jedoch hohe Kosten und kann sich unter Umständen leistungsmindernd auswirken, weshalb dieser Vorgang zum Teil programmgesteuert ausschließlich auf Prüfsituationen begrenzt wurde. Zudem muss die Menge des zugeführten Harnstoffs im Verhältnis zur Stickoxidemission des Verbrennungsmotors dosiert werden. Bei einer Überdosierung ergibt sich dabei durch den überschüssigen Ammoniak eine hohe Geruchsbelastung in der Umgebung des Verbrennungsmotors.

Insbesondere Dieselmotoren haben jedoch weiterhin eine enorme Bedeutung und können besonders bei großen LKWs und Schiffen nur äußert schwierig z.B. durch Elektromotoren ersetzt werden.

Daher ist es die Aufgabe der vorliegenden Erfindung, ein Verfahren zum Betrieb eines Verbrennungsmotors sowie einen Verbrennungsmotor zur Verfügung zu stellen, das bzw. der im Hinblick auf die oben genannten Nachteile des Standes der Technik verbessert ist, wobei insbesondere das Verfahren einen geringeren Stickoxidausstoß beim Betrieb des Verbrennungsmotors bewirkt als Verfahren nach dem Stand der Technik.

Diese Aufgabe wird durch das Verfahren nach Anspruch 1 und den Verbrennungsmotor nach Anspruch 15 gelöst. Vorteilhafte Ausführungsformen der Erfindung sind in den Unteransprüchen 2 bis 14 angegeben. Die Erfindung wird im Folgenden beschrieben.

Ein erster Aspekt der Erfindung betrifft ein Verfahren zum Betrieb eines Verbrennungsmotors, wobei in einem Brennraum eines Verbrennungsmotors, insbesondere eines Ottomotors oder eines Dieselmotors, bevorzugt eines Dieselmotors, ein Gemisch, insbesondere ein zündfähiges Gemisch, zwischen einem Kraftstoff und einem Verbrennungsfluid zur Verfügung gestellt wird, wobei der Kraftstoff eine Kohlenstoffverbindung aufweist, und wobei das Gemisch in dem Brennraum gezündet wird, so dass der Kraftstoff zumindest teilweise verbrennt, wobei der Kraftstoff durch das Verbrennungsfluid oxidiert wird, und wobei der Verbrennungsmotor durch bei der Verbrennung des Kraftstoffs freigesetzte Energie angetrieben wird, und wobei das Verbrennungsfluid 70 Vol.-% Stickstoff (N₂) oder weniger aufweist.

Der Begriff "Verbrennungsmotor" (auch als Brennkraftmaschine bezeichnet) bezeichnet dabei eine Verbrennungskraftmaschine zur Umwandlung chemischer Energie in mechanische Arbeit. Dabei wird in einem Brennraum (z.B. in einem Zylinder eines Hubkolbenmotors) ein zündfähiges Gemisch zwischen einem Kraftstoff und einem Verbrennungsfluid verbrannt, wobei in dem Brennraum Verbrennungswärme erzeugt wird, und wobei durch Wärmeausdehnung des in dem Brennraum entstehenden Heißgases ein Kolben oder Läufer bewegt wird. Das heißt, Strahltriebwerke, Raketentriebwerke und Gasturbinen sind keine Verbrennungsmotoren im Sinne der vorliegenden Erfindung.

Der Begriff "Brennraum" bezeichnet den Raum des Verbrennungsmotors, in dem die Verbrennungsreaktion zwischen dem Kraftstoff und dem Verbrennungsfluid stattfindet. Bei einem Hubkolbenmotor ist z.B. der Brennraum der von dem Kolben begrenzte gasgefüllte Raum, insbesondere in einem Zylinder des Hubkolbenmotors.

Gemäß einer Ausführungsform ist der Verbrennungsmotor ein Hubkolbenmotor.

Gemäß einer weiteren Ausführungsform ist der Verbrennungsmotor ein Zweitaktmotor oder ein Viertaktmotor.

Gemäß einer weiteren Ausführungsform ist der Verbrennungsmotor dazu ausgebildet bzw. eingerichtet, ein Fortbewegungsmittel, insbesondere ein Kraftfahrzeug oder ein Schiff, anzutreiben.

Gemäß einer weiteren Ausführungsform ist der Verbrennungsmotor ein Dieselmotor oder Ottomotor, insbesondere ein Dieselmotor.

Der Begriff "Dieselmotor" bezeichnet dabei einen Verbrennungsmotor, der dazu ausgebildet ist in einem Brennraum ein Gemisch zwischen einem Kraftstoff und einem Verbrennungsfluid derart zu komprimieren, dass durch die bei der Kompression erzeugte Wärme das Gemisch gezündet wird (das heißt der Verbrennungsprozess zwischen dem Kraftstoff und dem Verbrennungsfluid initiiert wird), wobei der Kraftstoff insbesondere ein Dieselkraftstoff ist.

Der Begriff "Ottomotor" bezeichnet einen Verbrennungsmotor, der wenigstens eine Zündvorrichtung, insbesondere eine Zündkerze, zur Zündung eines Gemisches zwischen einem Kraftstoff und einem Verbrennungsfluid in einem Brennraum des Ottomotors aufweist, wobei der Kraftstoff insbesondere ein Dieselkraftstoff ist.

Mit dem Begriff "Kraftstoff" ist im Kontext dieser Spezifikation ein Brennstoff gemeint, dessen chemische Energie durch Verbrennung in einem Verbrennungsmotor in Antriebskraft umgewandelt werden kann.

Der erfindungsgemäße Kraftstoff weist eine Kohlenstoffverbindung auf. Dabei ist mit dem Begriff Kohlenstoffverbindung ein organisches Molekül gemeint, das zumindest Kohlenstoff und Wasserstoff aufweist, z.B. eine Kohlenwasserstoffverbindung. Neben Kohlenstoff und Wasserstoff kann die Kohlenstoffverbindung auch Atome weiterer Elemente aufweisen, z.B. Stickstoff und/oder Schwefel.

Bei dem Kraftstoff kann es sich um einen fossilen Brennstoff handeln, der z.B. aus Erdöl oder Erdgas hergestellt ist. Alternativ dazu kann der Kraftstoff auch synthetisch hergestellt sein.

Der Kraftstoff wird beim Bereitstellen des Gemisches aus Kraftstoff und Verbrennungsfluid insbesondere in flüssiger oder gasförmiger Form oder als Flüssigkeits-Gas-Gemisch zur Verfügung gestellt. Der Kraftstoff kann außerdem insbesondere in flüssiger oder gasförmiger Form, insbesondere in einem Kraftstoffbehälter, gespeichert werden.

Gemäß einer Ausführungsform des Verfahrens ist der Kraftstoff ausgewählt aus der Gruppe bestehend aus Dieselkraftstoff, Marinedieselöl, Biodiesel, Emulsionskraftstoff, insbesondere einer Emulsion von Wasser in Dieselkraftstoff, Ottokraftstoff (auch als Benzin bezeichnet), Zweitaktgemisch (Ottokraftstoff mit Ölzusatz), Benzin-Benzol-Gemisch (Bibo), Leichtbenzin, Alkylatbenzin, einem XtL-Kraftstoff, insbesondere Biomass-to-Liquid-Kraftstoff (BtL), Coalto-Liquid-Kraftstoff (CtL) oder Gas-to-Liquid-Kraftstoff (GtL), einem Ethanol-Kraftstoff, insbesondere Bioethanol oder Cellulose-Ethanol, Butanol, insbesondere Biobutanol, Flüssigerdgas, insbesondere einem Propan-Butan-Gemisch, Autogas, Campinggas oder Liquified Petroleum Gas (LPG), Methanol, Pflanzenöl, Schweröl, Benzol, Gasöl, Erdgas, insbesondere Methan, Compressed Natural Gas (CNG) oder Liquid Natural Gas (LNG), Methan, insbesondere Biomethan, Kompogas, Biogas, Ethan, Dimethylether, Holzgas, Deponiegas und Blaugas.

Unter dem Begriff "Verbrennungsfluid" ist im Kontext der vorliegenden Spezifikation ein Stoff oder Stoffgemisch zu verstehen, der bzw. das dazu ausgebildet ist, den Kraftstoff in einer Verbrennungsreaktion zu oxidieren. Dabei fungiert das Verbrennungsfluid bzw. mindestens ein Bestandteil des Verbrennungsfluids, insbesondere Sauerstoff, also als Oxidator. Gemäß der vorliegenden Erfindung weist das Verbrennungsfluid einen Stickstoffgehalt von 70 Vol.-% oder weniger auf, das heißt es handelt sich bei dem erfindungsgemäßen Verbrennungsfluid nicht um reine Luft. Neben dem Oxidator, insbesondere Sauerstoff, kann das Verbrennungsfluid beliebige geeignete weitere Bestandteile umfassen.

Das Verbrennungsfluid wird beim Bereitstellen des Gemisches aus Kraftstoff und Verbrennungsfluid insbesondere in flüssiger oder gasförmiger Form oder als Flüssigkeits-Gas-Gemisch zur Verfügung gestellt. Der Kraftstoff kann außerdem insbesondere in flüssiger oder gasförmiger Form, insbesondere in einem Verbrennungsfluidbehälter, gelagert werden.

Durch den geringeren Stickstoffgehalt des Verbrennungsfluids ergibt sich im Vergleich zu Verbrennungsmotoren nach dem Stand der Technik vorteilhafterweise ein geringerer Anteil an Stickoxiden im Abgas des Verbrennungsmotors.

Insbesondere weist das Verbrennungsfluid Sauerstoff (O₂) auf oder besteht aus Sauerstoff (O₂). Dabei wirkt der Sauerstoff als Oxidator des Kraftstoffs.

Gemäß einer Ausführungsform wird das Gemisch zwischen dem Kraftstoff und dem Verbrennungsfluid außerhalb des Brennraums gebildet, mit anderen Worten der Kraftstoff wird außerhalb des Brennraums mit dem Verbrennungsfluid gemischt und das Gemisch zwischen dem Kraftstoff und dem Verbrennungsfluid wird in den Brennraum eingeleitet (sogenannte äußere Gemischbildung).

Gemäß einer weiteren Ausführungsform wird das Gemisch zwischen dem Kraftstoff und dem Verbrennungsfluid innerhalb des Brennraum gebildet, mit anderen Worten der Kraftstoff und das Verbrennungsfluid werden separat in den Brennraum eingeleitet und in dem Brennraum miteinander gemischt (sogenannte innere Gemischbildung).

Gemäß einer weiteren Ausführungsform wird das Gemisch zwischen dem Kraftstoff und dem Verbrennungsfluid in dem Brennraum durch Kompressionswärme gezündet. Das heißt, der Brennraum wird, insbesondere durch Bewegung eines Kolbens in einem Zylinder, verkleinert, so dass das Gemisch komprimiert wird, wobei das Gemisch durch die Kompression derart erhitzt wird, dass das Gemisch zündet. Dieses Prinzip wird für die Zündung eines Gemisches aus Kraftstoff und Verbrennungsluft z. B. bei Dieselmotoren nach dem Stand der Technik angewendet.

Gemäß einer weiteren Ausführungsform wird das Gemisch zwischen dem Kraftstoff und dem Verbrennungsfluid in dem Brennraum mittels einer Zündvorrichtung, insbesondere einer Zündkerze, gezündet. Dieses Prinzip wird für die Zündung eines Gemisches aus Kraftstoff und Verbrennungsluft z.B. bei Ottomotoren nach dem Stand der Technik angewendet.

Gemäß einer Ausführungsform des Verfahrens wird mittels der bei der Verbrennung des Kraftstoffs freigesetzten Energie eine Welle (auch als Antriebswelle oder Kurbelwelle bezeichnet) des Verbrennungsmotors angetrieben, das heißt in Rotationsbewegung versetzt. Mittels der Welle kann z.B. über ein Getriebe ein Kraftfahrzeug angetrieben werden.

Gemäß einer Ausführungsform weist das Verbrennungsfluid 50 Vol.-% Stickstoff (N₂) oder weniger auf.

Gemäß einer weiteren Ausführungsform weist das Verbrennungsfluid 30 Vol.-% Stickstoff (N₂) oder weniger auf.

Gemäß einer weiteren Ausführungsform weist das Verbrennungsfluid 10 Vol.-% Stickstoff (N₂) oder weniger, insbesondere 5 Vol.-% Stickstoff (N₂) oder weniger, auf.

Gemäß einer Ausführungsform weist das Verbrennungsfluid 70 Vol.-% Stickstoff (N₂) oder weniger, 65 Vol.-% Stickstoff (N₂) oder weniger, 60 Vol.-% Stickstoff (N₂) oder weniger, 55 Vol.-% Stickstoff (N₂) oder weniger, 50 Vol.-% Stickstoff (N₂) oder weniger, 45 Vol.-% Stickstoff (N₂) oder weniger, 40 Vol.-% Stickstoff (N₂) oder weniger, 35 Vol.-% Stickstoff (N₂) oder weniger, 30 Vol.-% Stickstoff (N₂) oder weniger, 25 Vol.-% Stickstoff (N₂) oder weniger, 20 Vol.-% Stickstoff (N₂) oder weniger, 15 Vol.-% Stickstoff (N₂) oder weniger, 10 Vol.-% Stickstoff (N₂) oder weniger oder 5 Vol.-% Stickstoff (N₂) oder weniger auf.

Gemäß einer weiteren Ausführungsform ist das Verbrennungsfluid im Wesentlichen frei von Stickstoff (N₂). Dies hat den Vorteil, dass die Bildung von Stickoxiden im Abgas des Verbrennungsmotors vollständig unterbleibt.

Gemäß einer weiteren Ausführungsform weist das Verbrennungsfluid wenigstens 30 Vol.-% Sauerstoff (O₂) auf.

Gemäß einer weiteren Ausführungsform weist das Verbrennungsfluid wenigstens 50 Vol.-% Sauerstoff (O₂), insbesondere wenigstens 70 Vol.-% Sauerstoff (O₂), auf.

Gemäß einer weiteren Ausführungsform weist das Verbrennungsfluid wenigstens 90 Vol.-% Sauerstoff (O₂), insbesondere wenigstens 95 Vol.-% Sauerstoff (O₂), auf.

Dabei fungiert der Sauerstoff des Verbrennungsfluids als Oxidator des Kraftstoffs in der Verbrennungsreaktion. Durch einen im Vergleich zu Luft erhöhten Sauerstoffanteil wird vorteilhafterweise eine größere Oxidatormenge pro Volumen des Verbrennungsfluids zur Verfügung gestellt, was die Effektivität der Verbrennungsreaktion erhöht. Insbesondere kann somit ein geringeres Volumen des Verbrennungsfluids zur Verfügung gestellt werden.

Gemäß einer weiteren Ausführungsform weist das Verbrennungsfluid wenigstens 30 Vol.-% Sauerstoff (O₂), wenigstens 35 Vol.-% Sauerstoff (O₂), wenigstens 40 Vol.-% Sauerstoff (O₂), wenigstens 45 Vol.-% Sauerstoff (O₂), wenigstens 50 Vol.-% Sauerstoff (O₂), wenigstens 55 Vol.-% Sauerstoff (O₂), wenigstens 60 Vol.-% Sauerstoff (O₂), wenigstens 65 Vol.-% Sauerstoff (O₂), wenigstens 70 Vol.-% Sauerstoff (O₂), wenigstens 75 Vol.-% Sauerstoff (O₂), wenigstens 80 Vol.-% Sauerstoff (O₂), wenigstens 85 Vol.-% Sauerstoff (O₂), wenigstens 90 Vol.-% Sauerstoff (O₂) oder wenigstens 95 Vol.-% Sauerstoff (O₂) auf.

Gemäß einer weiteren Ausführungsform ist das Verbrennungsfluid Sauerstoff (O₂). Dies hat den Vorteil, dass aufgrund des fehlenden Stickstoffs in dem Verbrennungsfluid in dem Abgas des Verbrennungsmotors keine Stickoxide gebildet werden, und dass die Verbrennungsreaktion aufgrund des vollständig aus dem Oxidator Sauerstoff bestehenden Verbrennungsfluids äußerst effektiv ist, so dass insbesondere die Menge des zugeführten Verbrennungsfluids reduziert werden kann.

Bei der Nutzung von Strom durch Wind (z.B. offshore) entsteht derzeit je nach Windstärke und nachts Strom, der keine Verwendung finden kann, was zum Abschalten der Rotorblätter führt. Derzeit wird dieser überschüssige Strom bereits zur Spaltung von Wasser in Wasserstoff und Sauerstoff verwendet. Die Entstehung weiterer Windstromanlagen ist längst nicht abgeschlossen und Stromerzeugung aus Sonnenlicht ist eine weitere potentielle Energiequelle für die Erzeugung von Sauerstoff. Mit anderen Worten: den Sauerstoff gibt es zu äußerst geringen Kosten (vor allem Verteilungskosten).

Gemäß einer weiteren Ausführungsform weist das Verbrennungsfluid Stickstoff (N₂) und Sauerstoff (O₂) auf.

Gemäß einer weiteren Ausführungsform weist das Verbrennungsfluid 70 Vol.-% Stickstoff (N₂) oder weniger und wenigstens 30 Vol.-% Sauerstoff (O₂), 65 Vol.-% Stickstoff (N₂) oder weniger und wenigstens 35 Vol.-% Sauerstoff (O₂), 60 Vol.-% Stickstoff (N₂) oder weniger und wenigstens 40 Vol.-% Sauerstoff (O₂), 55 Vol.-% Stickstoff (N₂) oder wenniger und wenigstens 45 Vol.-% Sauerstoff (O₂), 50 Vol.-% Stickstoff (N₂) oder weniger und wenigstens 50 Vol.-% Sauerstoff (O₂), 45 Vol.-% Stickstoff (N₂) oder weniger und wenigstens 55 Vol.-% Sauerstoff (O₂), 40 Vol.-% Stickstoff (N₂) oder weniger und wenigstens 60 Vol.-% Sauerstoff (O₂), 35 Vol.-% Stickstoff (N₂) oder weniger und wenigstens 65 Vol.-% Sauerstoff (O₂), 30 Vol.-% Stickstoff (N₂) oder weniger und wenigstens 70 Vol.-% Sauerstoff (O₂), 25 Vol.-% Stickstoff (N₂) oder weniger und wenigstens 75 Vol.-% Sauerstoff (O₂), 20 Vol.-% Stickstoff (N₂) oder weniger und wenigstens 80 Vol.-% Sauerstoff (O₂), 15 Vol.-% Stickstoff (N₂) oder weniger und wenigstens 85 Vol.-% Sauerstoff (O₂), 10 Vol.-% Stickstoff (N₂) oder weniger und wenigstens 90 Vol.-% Sauerstoff (O₂) oder 5 Vol.-% Stickstoff (N₂) oder weniger und wenigstens 95 Vol.-% Sauerstoff (O₂) auf.

Gemäß einer weiteren Ausführungsform ist das Verbrennungsfluid durch ein Gemisch aus Stickstoff (N₂) und Sauerstoff (O₂) gebildet.

Gemäß einer weiteren Ausführungsform ist das Verbrennungsfluid durch ein Gemisch aus 70 Vol.-% Stickstoff (N₂) und 30 Vol.-% Sauerstoff (O₂), 65 Vol.-% Stickstoff (N₂) und 35 Vol.-% Sauerstoff (O₂), 60 Vol.-% Stickstoff (N₂) und 40 Vol.-% Sauerstoff (O₂), 55 Vol.-% Stickstoff (N₂) und 45 Vol.-% Sauerstoff (O₂), 50 Vol.-% Stickstoff (N₂) und 50 Vol.-% Sauerstoff (O₂), 45 Vol.-% Stickstoff (N₂) und 55 Vol.-% Sauerstoff (O₂), 40 Vol.-% Stickstoff (N₂) und 60 Vol.-% Sauerstoff (O₂), 35 Vol.-% Stickstoff (N₂) und 65 Vol.-% Sauerstoff (O₂), 30 Vol.-% Stickstoff (N₂) und 70 Vol.-% Sauerstoff (O₂), 25 Vol.-% Stickstoff (N₂) und 75 Vol.-% Sauerstoff (O₂), 20 Vol.-% Stickstoff (N₂) und 80 Vol.-% Sauerstoff (O₂), 15 Vol.-% Stickstoff (N₂) und 85 Vol.-% Sauerstoff (O₂), 10 Vol.-% Stickstoff (N₂) und 90 Vol.-% Sauerstoff (O₂) oder 5 Vol.-% Stickstoff (N₂) und 95 Vol.-% Sauerstoff (O₂) gebildet.

Gemäß einer weiteren Ausführungsform weist das Verbrennungsfluid Luft auf.

Dabei ist unter dem Begriff Luft ein Gas zu verstehen, dass ungefähr 78 Vol.-% Stickstoff (N₂), ungefähr 21 Vol.-% Sauerstoff (O₂) sowie insbesondere Argon und Kohlendioxid (CO₂) aufweist.

Selbstverständlich besteht das Verbrennungsfluid gemäß dieser Ausführungsform nicht vollständig aus Luft, da sonst die Stickstoffkonzentration des Verbrennungsfluids über 70 Vol.-% liegen würde, sondern aus einem Gemisch zwischen Luft und mindestens einem weiteren Fluid.

Gemäß einer weiteren Ausführungsform weist das Verbrennungsfluid 88 Vol.-% Luft oder weniger, 85 Vol.-% Luft oder weniger, 80 Vol.-% Luft oder weniger, 75 Vol.-% Luft oder weniger, 70 Vol.-% Luft oder weniger, 65 Vol.-% Luft oder weniger, 60 Vol.-% Luft oder weniger, 55 Vol.-% Luft oder weniger, 50 Vol.-% Luft oder weniger, 45 Vol.-% Luft oder weniger, 40 Vol.-% Luft oder weniger, 35 Vol.-% Luft oder weniger, 30 Vol.-% Luft oder weniger, 25 Vol.-% Luft oder weniger, 20 Vol.-% Luft oder weniger, 15 Vol.-% Luft oder weniger, 10 Vol.-% Luft oder weniger oder 5 Vol.-% Luft oder weniger auf.

Gemäß einer weiteren Ausführungsform ist das Verbrennungsfluid durch ein Gemisch aus Luft und reinem Sauerstoff (O₂) gebildet. Da Luft bereits ungefähr 21 Vol-% Sauerstoff aufweist, ergibt sich die Gesamtmenge an Sauerstoff in dem besagten Gemisch aus dem Verhältnis zwischen der Luft und dem reinen Sauerstoff (O₂).

Dabei ist unter dem Begriff "reiner Sauerstoff" ein Gas zu verstehen, das mindestens 99 Vol.-% Sauerstoff (O₂), insbesondere mindestens 99,5 Vol.-% Sauerstoff (O₂), aufweist.

Ein Gemisch zwischen Luft und Sauerstoff als Verbrennungsfluid hat den Vorteil, dass die Menge an Stickstoff in dem Verbrennungsfluid reduziert ist und somit weniger Stickoxide gebildet werden, jedoch eine geringere Menge an Sauerstoff verbraucht wird, so dass insbesondere weniger reiner Sauerstoff mit dem Verbrennungsmotor mitgeführt werden muss.

Dabei kann insbesondere der Anteil des reinen Sauerstoffs in dem Verbrennungsfluid situationsbedingt angepasst werden, z.B. durch Regelung des Mischungsverhältnisses zwischen dem reinen Sauerstoff und der Luft beim Betrieb des Verbrennungsmotors. Z.B. kann bei einem von dem Verbrennungsmotor angetriebenen Fahrzeug im Stadtverkehr, wo z.B. nur geringe Stickoxidkonzentrationen erlaubt sind, ein höherer Sauerstoffanteil eingestellt werden, so dass weniger Stickoxide gebildet werden.

Eine solche situationsbedingte Regelung ist auch für andere Fluidgemische außer Sauerstoff und Luft denkbar, z.B. zwischen Luft und einem Inertgas, so dass der Stickstoffgehalt des Verbrennungsfluids situationsgemäß angepasst werden kann. Weiterhin kann insbesondere das erfindungsgemäße Verfahren auch in bestimmten Situationen angewendet werden, während der Verbrennungsmotor in anderen Situationen wie nach dem Stand der Technik üblich mit Verbrennungsluft betrieben wird.

Gemäß einer weiteren Ausführungsform wird der reine Sauerstoff, insbesondere in einem Verbrennungsfluidbehälter, gespeichert, wobei der reine Sauerstoff vor dem Bereitstellen des Gemisches zwischen dem Verbrennungsfluid und dem Kraftstoff in dem Brennraum mit Luft, insbesondere Umgebungsluft, gemischt wird. Alternativ dazu kann auch bereits das Gemisch zwischen dem reinen Sauerstoff und der Luft, insbesondere in dem Verbrennungsfluidbehälter, gespeichert werden und in den Brennraum eingeleitet werden.

Gemäß einer weiteren Ausführungsform weist das Verbrennungsfluid 88 Vol.-% Luft oder weniger und wenigstens 12 Vol.-% reinen Sauerstoff (O₂), 85 Vol.-% Luft oder weniger und wenigstens 15 Vol.-% reinen Sauerstoff (O₂), 80 Vol.-% Luft oder weniger und wenigstens 20 Vol.-% reinen Sauerstoff (O₂), 75 Vol.-% Luft oder weniger und wenigstens 25 Vol.-% reinen Sauerstoff (O₂), 70 Vol.-% Luft oder weniger und wenigstens 30 Vol.-% reinen Sauerstoff (O₂), 65 Vol.-% Luft oder weniger und wenigstens 35 Vol.-% reinen Sauerstoff (O₂), 60 Vol.-% Luft oder weniger und wenigstens 40 Vol.-% reinen Sauerstoff (O₂), 55 Vol.-% Luft oder weniger und wenigstens 45 Vol.-% reinen Sauerstoff (O₂), 50 Vol.-% Luft oder weniger und wenigstens 50 Vol.-% reinen Sauerstoff (O₂), 45 Vol.-% Luft oder weniger und wenigstens 55 Vol.-% reinen Sauerstoff (O₂), 40 Vol.-% Luft oder weniger und wenigstens 60 Vol.-% reinen Sauerstoff (O₂), 35 Vol.-% Luft oder weniger und wenigstens 65 Vol.-% reinen Sauerstoff (O₂), 30 Vol.-% Luft oder weniger und wenigstens 70 Vol.-% reinen Sauerstoff (O₂), 25 Vol.-% Luft oder weniger und wenigstens 75 Vol.-% reinen Sauerstoff (O₂), 20 Vol.-% Luft oder weniger und wenigstens 80 Vol.-% reinen Sauerstoff (O₂), 15 Vol.-% Luft oder weniger und wenigstens 85 Vol.-% reinen Sauerstoff (O₂), 10 Vol.-% Luft oder weniger und wenigstens 90 Vol.-% reinen Sauerstoff (O₂) oder 5 Vol.-% Luft oder weniger und wenigstens 95 Vol.-% reinen Sauerstoff (O₂) auf.

Gemäß einer weiteren Ausführungsform ist das Verbrennungsfluid durch ein Gemisch aus 88 Vol.-% Luft und 12 Vol.-% reinem Sauerstoff (O₂), 85 Vol.-% Luft und 15 Vol.-% reinem Sauerstoff (O₂), 80 Vol.-% Luft und 20 Vol.-% reinem Sauerstoff (O₂), 75 Vol.-% Luft und 25 Vol.-% reinem Sauerstoff (O₂), 70 Vol.-% Luft und 30 Vol.-% reinem Sauerstoff (O₂), 65 Vol.-% Luft und 35 Vol.-% reinem Sauerstoff (O₂), 60 Vol.-% Luft und 40 Vol.-% reinem Sauerstoff (O₂), 55 Vol.-% Luft und 45 Vol.-% reinem Sauerstoff (O₂), 50 Vol.-% Luft und 50 Vol.-% reinem Sauerstoff (O₂), 45 Vol.-% Luft und 55 Vol.-% reinem Sauerstoff (O₂), 40 Vol.-% Luft und 60 Vol.-% reinem Sauerstoff (O₂), 35 Vol.-% Luft und 65 Vol.-% reinem Sauerstoff (O₂), 30 Vol.-% Luft und 70 Vol.-% reinem Sauerstoff (O₂), 25 Vol.-% Luft und 75 Vol.-% reinem Sauerstoff (O₂), 20 Vol.-% Luft und 80 Vol.-% reinem Sauerstoff (O₂), 15 Vol.-% Luft und 85 Vol.-% reinem Sauerstoff (O₂), 10 Vol.-% Luft und 90 Vol.-% reinem Sauerstoff (O₂) oder 5 Vol.-% Luft und 95 Vol.-% reinem Sauerstoff (O₂) gebildet.

Gemäß einer weiteren Ausführungsform wird das Verbrennungsfluid bei einem ersten Druck gespeichert, wobei in dem Brennraum beim Einleiten des Verbrennungsfluids in den Brennraum ein zweiter im Vergleich zu dem ersten Druck niedrigerer Druck herrscht, wobei der zweite Druck wenigstens 1,5 bar, insbesondere wenigstens 2 bar, beträgt, und wobei das Verbrennungsfluid unter Ausnutzung der Differenz zwischen dem ersten Druck und dem zweiten Druck in den Brennraum eingeleitet wird. Das Verbrennungsfluid wird dabei insbesondere vor dem Einleiten in den Brennraum mit dem Kraftstoff gemischt. Alternativ kann das Verbrennungsfluid dabei natürlich auch erst in dem Brennraum mit dem Kraftstoff gemischt werden.

Der zur Lagerung vorteilhafte Überdruck des Verbrennungsfluids gegenüber dem Atmosphärendruck wird bei dieser Ausführungsform zum Einleiten des Verbrennungsfluids oder zum Einleiten eines Gemisches zwischen dem Kraftstoff und dem Verbrennungsfluid in den Brennraum genutzt, ohne dass das Verbrennungsfluid vor dem Einleiten in den Brennraum komprimiert werden muss. Dadurch kann insbesondere auf einen Kompressor verzichtet werden, wodurch Gewicht, Platz und Kosten eingespart werden.

Das bereits vorkomprimierte Verbrennungsfluid kann sich dabei insbesondere zusätzlich leistungssteigernd auswirken, da es einen Teil des für die Verbrennung benötigten Druckes bereits mitbringt, was zusätzlich eine Minderung des CO₂-Ausstoßes zur Folge hätte.

Gemäß einer weiteren Ausführungsform wird das Verbrennungsfluid in verflüssigter Form, insbesondere in einem Kryogenbehälter, gespeichert.

Solch ein zusätzlicher Tank könnte z.B. im Fall eines mit dem Verbrennungsmotor betriebenen Fahrzeugs, wie bereits nach dem Stand der Technik insbesondere für Wasserstoff und sogenanntes Natural Gas üblich, an Tankstellen nachgefüllt werden.

Gemäß einer weiteren Ausführungsform wird das verflüssigte Verbrennungsfluid zumindest teilweise verdampft, wobei das verdampfte Verbrennungsfluid in den Brennraum eingeleitet wird.

Gemäß einer weiteren Ausführungsform wird das Verbrennungsfluid in einem Verdampfungsraum zumindest teilweise verdampft, wobei das verdampfte Verbrennungsfluid aus dem Verdampfungsraum in den Brennraum eingeleitet wird. Das Verbrennungsfluid wird dabei insbesondere vor dem Einleiten in den Brennraum mit dem Kraftstoff gemischt. Alternativ kann das Verbrennungsfluid dabei natürlich auch erst in dem Brennraum mit dem Kraftstoff gemischt werden.

In verflüssigter Form lässt sich das Verbrennungsfluid gut speichern. Damit das Verbrennungsfluid dann in dem Brennraum gasförmig vorliegt, kann das Verbrennungsfluid z.B. in dem Verdampfungsraum expandiert werden.

Alternativ dazu kann das Verbrennungsfluid in verflüssigter Form in den Brennraum eingeleitet werden, wobei insbesondere das Verbrennungsfluid in dem Brennraum verdampft.

Gemäß einer weiteren Ausführungsform wird der Verbrennungsmotor mittels des, insbesondere in dem Verdampfungsraum, verdampften Verbrennungsfluids gekühlt.

Hierbei kann die ohnehin beim Verdampfen des Verbrennungsfluids der Umgebung entzogene Verdampfungswärme verwendet werden. Dadurch kann insbesondere auf eine separate Kühlung (z.B. einer Luft- oder Flüssigkeitskühlung) des Verbrennungsmotors verzichtet werden, oder die Leistung der separaten Kühlung kann verringert werden, so dass insbesondere Platz, Gewicht und Kosten eingespart werden können.

Weiterhin können insbesondere auch andere Komponenten eines Fahrzeugs, das von dem Verbrennungsmotor angetrieben wird, mittels des verdampften Verbrennungsfluids gekühlt werden. Z.B. kann die beim Verdampfen des Verbrennungsfluids erzeugte Kälte in einer Klimaanlage eines Fahrzeugs zum Kühlen verwendet werden.

Gemäß einer weiteren Ausführungsform wird bei der Verbrennung des Kraftstoffs in dem Brennraum ein Abgas erzeugt, wobei das Abgas, insbesondere über eine Abgasleitung, aus dem Brennraum abgezogen wird, und wobei das abgezogene Abgas mittels des, insbesondere in dem Verdampfungsraum, verdampften Verbrennungsfluids gekühlt wird. Dabei steht der Verdampfungsraum insbesondere mit einer Abgasleitung des Verbrennungsmotors in wärmeleitender Verbindung.

Durch die Kühlung des Abgases mittels der ohnehin durch das Verdampfen erzeugten Kälte kann insbesondere ohne eine separate Abgaskühlung die Bildung von Stickoxiden im Abgas (z. B. durch sogenannte Dissoziation) weiter verringert werden.

Gemäß einer weiteren Ausführungsform wird das Verbrennungsfluid durch Spaltung, insbesondere elektrolytische Spaltung, von Wasser zu Wasserstoff (H₂) und Sauerstoff (O₂) erzeugt, wobei der erzeugte Sauerstoff (als Gemisch mit dem Kraftstoff oder separat) in den Brennraum oder in einen Verdampfungsfluidbehälter zur Speicherung eines Verdampfungsfluids eingeleitet wird. Der erzeugte Sauerstoff wird insbesondere von dem erzeugten Wasserstoff getrennt. Weiterhin kann der erzeugte Sauerstoff vor dem Einleiten in den Brennraum mit weiteren Fluiden, z.B. Luft, gemischt werden. Dabei kann die für die elektrolytische Spaltung benötigte elektrische Energie z.B. durch Bremskraftrückgewinnung eines mittels des Verbrennungsmotors angetriebenen Fahrzeugs zur Verfügung gestellt werden.

Diese Ausführungsform hat, insbesondere beim Antrieb von Fahrzeugen den Vorteil, dass weniger Verbrennungsfluid mit dem Verbrennungsmotor mitgeführt werden muss.

Ein zweiter Aspekt der Erfindung betrifft einen Verbrennungsmotor, der insbesondere mittels eines Verfahrens nach dem ersten Aspekt der Erfindung betreibbar ist, wobei der Verbrennungsmotor einen Brennraum aufweist, und wobei der Verbrennungsmotor dazu ausgebildet ist, in dem Brennraum ein Gemisch zwischen einem eine Kohlenstoffverbindung aufweisenden Kraftstoff, und einem 70 Vol.-% Stickstoff oder weniger aufweisenden Verbrennungsfluid zur Verfügung zu stellen, und das Gemisch in dem Brennraum zu zünden, so dass der Kraftstoff zumindest teilweise verbrennt, wobei der Verbrennungsmotor dazu ausgebildet ist, durch bei der Verbrennung des Kraftstoffs freigesetzte Energie angetrieben zu werden.

Dabei weist der Verbrennungsmotor insbesondere eine Welle auf, die durch bei der Verbrennung des Kraftstoffs freigesetzte Energie antreibbar ist, also in Rotationsbewegung versetzbar ist. Diese Welle ist insbesondere mit einem Getriebe eines Fahrzeugs verbunden, so dass das Fahrzeug von dem Verbrennungsmotor angetrieben werden kann.

Gemäß einer weiteren Ausführungsform weist der Verbrennungsmotor einen Verbrennungsfluidbehälter zur Speicherung des Verbrennungsfluids bei einem ersten Druck auf, wobei der Verbrennungsmotor derart konfiguriert ist, dass in dem Brennraum beim Einleiten des Verbrennungsfluids in den Brennraum ein zweiter im Vergleich zu dem ersten Druck niedrigerer Druck herrscht, wobei der zweite Druck wenigstens 1,5 bar, insbesondere wenigstens 2 bar, beträgt, so dass das Verbrennungsfluid unter Ausnutzung der Differenz zwischen dem ersten Druck und dem zweiten Druck in den Brennraum einleitbar ist.

Gemäß einer weiteren Ausführungsform weist der Verbrennungsmotor einen Kryogenbehälter zur Speicherung des Verbrennungsfluids in verflüssigter Form auf.

Gemäß einer weiteren Ausführungsform weist der Verbrennungsmotor einen Verdampfungsraum auf, der dazu ausgebildet ist, das Verbrennungsfluid zumindest teilweise zu verdampfen, wobei der Kryogenbehälter mit dem Verdampfungsraum in Strömungsverbindung bringbar ist, so dass das Verbrennungsfluid aus dem Kryogenbehälter in den Verdampfungsraum einleitbar ist, und wobei der Verdampfungsraum mit dem Brennraum in Strömungsverbindung bringbar ist, so dass das verdampfte Verbrennungsfluid aus dem Verdampfungsraum in den Brennraum einleitbar ist.

Gemäß einer weiteren Ausführungsform weist der Verbrennungsmotor eine Abgasleitung zum Abziehen eines bei der Verbrennung des Kraftstoffs in dem Brennraum erzeugten Abgases aus dem Brennraum auf, wobei die Abgasleitung mit dem Verdampfungsraum derart in wärmeleitender Verbindung steht, dass das aus dem Brennraum abgezogene Abgas mittels des in dem Verdampfungsraum verdampften Verbrennungsfluids gekühlt wird.

Gemäß einer Ausführungsform weist der Verbrennungsmotor eine Einrichtung zur Erzeugung von Verbrennungsfluid auf, wobei die Einrichtung zur Erzeugung von Verbrennungsfluid derart mit einem Verbrennungsfluidbehälter zur Speicherung von Verbrennungsfluid oder mit dem Brennraum in Strömungsverbindung bringbar ist, dass das mittels der Einrichtung erzeugte Verbrennungsfluid in den Verbrennungsfluidbehälter oder den Brennraum einleitbar ist.

Gemäß einer weiteren Ausführungsform ist die Einrichtung zur Erzeugung von Verbrennungsfluid dazu ausgebildet, durch elektrolytische Spaltung von Wasser Wasserstoff und Sauerstoff zu erzeugen, wobei die Einrichtung zur Erzeugung von Verbrennungsfluid bzw. der Verbrennungsmotor dazu ausgebildet ist, den erzeugten Sauerstoff in den Verbrennungsfluidbehälter oder den Brennraum einzuleiten.

Gemäß einer weiteren Ausführungsform ist die Einrichtung zur Erzeugung von Verbrennungsfluid dazu ausgebildet, den erzeugten Wasserstoff von dem erzeugten Sauerstoff zu trennen.

Die Einrichtung zur Erzeugung von Verbrennungsfluid kann z.B. durch Energie, insbesondere elektrische Energie, betreibbar sein, die durch Bremskraftrückgewinnung eines von dem Verbrennungsmotor angetriebenen Fahrzeugs zur Verfügung gestellt wird.

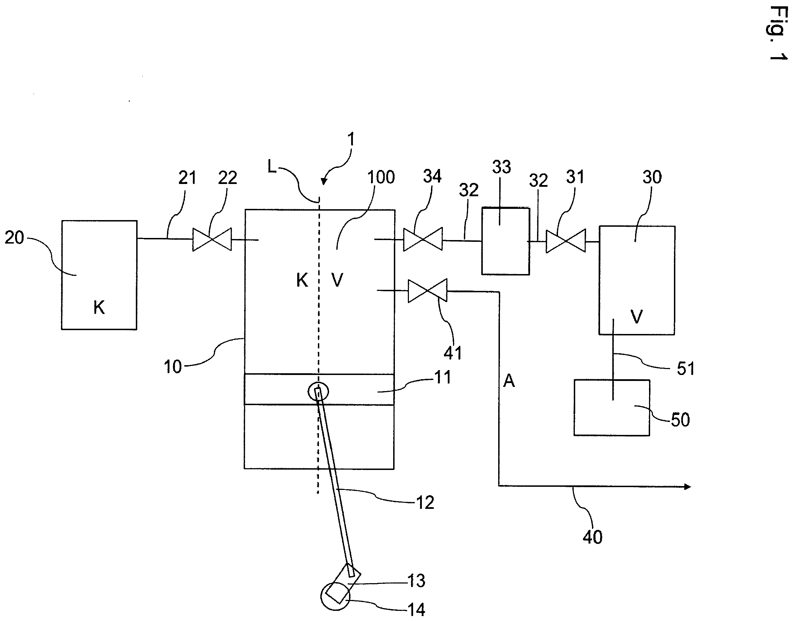

Weitere Beispiele und Ausführungsformen der Erfindung werden im Folgenden anhand der Figur 1 beschrieben.
- Fig. 1 zeigt: eine schematische Darstellung eines erfindungsgemäßen Verbrennungsmotors.
Die Figur 1 zeigt einen erfindungsgemäßen Verbrennungsmotor 1, der als Hubkolbenmotor ausgebildet ist. Der Verbrennungsmotor 1 weist einen Zylinder 10 auf, wobei der Zylinder 10 einen Innenraum umgibt, in dem ein Kolben 11 entlang einer Längsachse L beweglich gelagert ist. Der Kolben 11 liegt dabei derart dichtend an einer Innenwandung des Zylinders 10 an, so dass zwischen dem Kolben 11 und der Innenwandung ein Brennraum 100 ausgebildet ist.

Der Verbrennungsmotor 1 weist weiterhin einen Kraftstoffbehälter 20 zur Speicherung eines Kraftstoffs K auf, wobei der Kraftstoffbehälter 20 über eine Kraftstoffleitung 21 mit dem Brennraum 100 in Strömungsverbindung bringbar ist, so dass Kraftstoff K aus dem Kraftstoffbehälter 20 in den Brennraum 100 einleitbar ist. Die Kraftstoffleitung 21 ist insbesondere mittels eines Kraftstoffventils 22 verschließbar, so dass die Strömungsverbindung zwischen dem Kraftstoffbehälter 20 und dem Brennraum 100 unterbrochen bzw. gedrosselt werden kann und ein Fluss des Kraftstoffs K aus dem Kraftstoffbehälter 20 in den Brennraum 100 mittels des Kraftstoffventils 22 regulierbar ist.

Weiterhin weist der Verbrennungsmotor 1 einen Verbrennungsfluidbehälter 30 zur Speicherung eines erfindungsgemäßen Verbrennungsfluids V auf, wobei der Verbrennungsfluidbehälter 30 über eine Verbrennungsfluidleitung 32 und einen Verdampfungsraum 33 mit dem Brennraum 100 in Strömungsverbindung bringbar ist. Die Verbrennungsfluidleitung 32 ist insbesondere mittels eines ersten Verbrennungsfluidventils 31 (stromauf des Verdamfpungsraums 33) und eines zweiten Verbrennunsfluidventils 34 (stromab des Verdampfungsraums 33) verschließbar, so dass die Strömungsverbindung zwischen dem Verbrennungsfluidbehälter 30 und dem Verdampfungsraum 33 und/oder zwischen dem Verdampfungsraum 33 und dem Brennraum 100 unterbrochen wird, bzw. gedrosselt wird, so dass ein Fluss des Verbrennungsfluids V aus dem Verbrennungsfluidbehälter 30 in den Verdampfungsraum 33 mittels des ersten Verbrennungsfluidventils 31 bzw. aus dem Verdampfungsraum 33 in den Brennraum 100 mittels des zweiten Verbrennungsfluidventils 34 regulierbar ist.

In der Konfiguration des Verbrennungsmotors 1 gemäß Fig. 1 liegt das Verbrennungsfluid V in dem Verbrennungsfluidbehälter 30 insbesondere in verflüssigter Form vor. Dabei verdampft das Verbrennungsfluid V insbesondere in dem Verdampfungsraum 33 zumindest teilweise und strömt dann gasförmig oder als Gas-Flüssigkeits-Gemisch aus dem Verdampfungsraum 33 in den Brennraum 100. Insbesondere wenn kein Verdampfungsraum 30 vorgesehen ist, kann das flüssige Verbrennungsfluid V natürlich z.B. auch in der Verbrennungsfluidleitung 32 zumindest teilweise verdampfen.

Alternativ dazu kann das Verbrennungfluid V auch gasförmig in dem Verbrennungsfluidbehälter 30 vorliegen. Dabei kann insbesondere der Verbrennungsfluidbehälter 30 direkt mit dem Brennraum 100 verbunden sein, wobei insbesondere kein Verdampfungsraum 33 vorgesehen ist.

Bei dem in Fig. 1 gezeigten Beispiel wird der Kraftstoff K in dem Brennraum 100 mit dem Verbrennungsfluid V gemischt, es handelt sich also um einen Verbrennungsmotor 1 mit sogenannter innerer Gemischbildung.

Natürlich kann in dem erfindungsgemäßen Verbrennungsmotor 1 auch eine Mischkammer zur Mischung des Verbrennungsfluids V mit dem Kraftstoff K vorgesehen sein (äußere Gemischbildung), wobei die Mischkammer mit dem Kraftstoffbehälter 20 und dem Verbrennungsfluidbehälter 30 in Strömungsverbindung bringbar ist, so dass Kraftstoff K aus dem Kraftstoffbehälter 20 in die Mischkammer einleitbar ist, und so dass Verbrennungsfluid V aus dem Verbrennungsfluidbehälter 30 in die Mischkammer einleitbar ist, wobei die Mischkammer mit dem Brennraum 100 in Strömungsverbindung bringbar ist, so dass das Gemisch zwischen dem Kraftstoff K und dem Verbrennungsfluid V aus der Mischkammer in den Brennraum 100 einleitbar ist.

Der erfindungsgemäße Verbrennungsmotor 1 kann selbstverständlich auch eine Mehrzahl an Zylindern 10 (z.B. zwei, vier, sechs oder acht Zylinder 10) mit jeweils in den Zylindern 10 beweglich gelagerten Kolben 11 aufweisen, so dass mehrere Brennräume 100 vorgesehen sind, wobei jeder Brennraum 100 mit dem Kraftstoffbehälter 20 und dem Verbrennungsfluidbehälter 30 in den jeweiligen Brennraum 100 einleitbar ist.

Der Verbrennungsmotor 1 ist weiterhin dazu ausgebildet, das in dem Brennraum 100 zur Verfügung gestellte Gemisch zwischen dem Kraftstoff K und dem Verbrennungsfluid V zu zünden, so dass der Kraftstoff K verbrennt. Die Zündung kann dabei z.B. durch Ausnutzung der Kompressionswärme bei der Verkleinerung des Brennraums 100, wenn sich der Kolben 11 in dem Zylinder 10 entlang der Längsachse L nach oben bewegt, oder durch eine Zündkerze erfolgen.

Das bei der Zündung des Gemisches freiwerdende Gas treibt den Kolben 11 in dem Zylinder 10 nach unten, so dass sich das Volumen des Brennraums 100 vergrößert.

Dabei wird eine über eine Pleuelstange 12 und eine Kurbel 13 mit dem Kolben 11 mechanisch verbundene Welle 14 in Drehbewegung versetzt, wodurch die bei der Verbrennungsreaktion freiwerdende Energie in Bewegungsenergie umgewandelt wird.

Selbstverständlich können (wie bei Mehrzylinderhubkolbenmotoren üblich) die jeweiligen Kolben 11 mehrerer Zylinder 10 über entsprechende Pleuelstangen 12 und Kurbeln 13 mit der Welle 14 derart gekoppelt sein, dass die bei den Verbrennungsreaktionen in den entsprechenden Brennräumen 100 freiwerdende Energie in (Dreh-) Bewegungsenergie der Kurbel 14 umgewandelt wird.

Die Fig. 1 zeigt weiterhin eine Abgasleitung 40, die mit dem Brennraum 100 in Strömungsverbindung bringbar ist, so dass bei der Verbrennungsreaktion zwischen dem Kraftstoff K und dem Verbrennungsfluid V entstehendes Abgas A über die Abgasleitung 40 aus dem Brennraum 100 abziehbar ist. Die Abgasleitung 40 ist mittels eines Abgasventils 41 verschließbar.

Durch das erfindungsgemäße Verbrennungsfluid V, welches im Vergleich zu Luft einen verringerten Stickstoffgehalt aufweist, werden bei der Verbrennungsreaktion vorteilhafterweise weniger Stickoxide gebildet als bei Verbrennungsmotoren nach dem Stand der Technik.

Die Abgasleitung 40 kann außerdem mit dem Verdampfungsraum 33 derart wärmeleitend verbunden sein, dass das in der Abgasleitung 40 strömende Abgas A durch die beim Verdampfen des Verbrennunsfluids V entstehende Kälte gekühlt wird. Dies bewirkt vorteilhafterweise eine weitere Reduzierung der Stickoxidbildung im Abgas A.

Weiterhin ist in Fig. 1 eine Einrichtung 50 zur Erzeugung von Verbrennungsfluid V gezeigt, die über eine Verbindungsleitung 51 derart mit dem Verbrennungsfluidbehälter 30 in Strömungsverbindung bringbar ist, dass mittels der Einrichtung 50 erzeugtes Verbrennungsfluid V in den Verbrennungsfluidbehälter 30 einleitbar ist.

Die Einrichtung 50 kann z.B. dazu konfiguriert sein, Wasser durch elektrolytische Spaltung in Wasserstoff und Sauerstoff umzusetzen, wobei insbesondere der erzeugte Sauerstoff über die Verbindungsleitung 51 in den Verbrennungsfluidbehälter 30 eingeleitet werden kann.

Dadurch kann z.B. beim Betrieb eines Fahrzeugs, das von dem Verbrennungsmotor 1 angetrieben wird, Verbrennungsfluid V nachproduziert werden, so dass weniger Verbrennungsfluid V in dem Verbrennungsfluidbehälter 30 mitgeführt werden muss. Die Einrichtung 50 kann z.B. zumindest teilweise mit Energie betrieben werden, die über Bremskraftrückgewinnung des Fahrzeugs zur Verfügung gestellt wird.

**Bezugszeichenliste**

| | |
|---|---|
| 1 | Verbrennungsmotor |
| 10 | Zylinder |
| 11 | Kolben |
| 12 | Pleuelstange |
| 13 | Kurbel |
| 14 | Welle |
| 20 | Kraftstoffbehälter |
| 21 | Kraftstoffleitung |
| 22 | Kraftstoffventil |
| 30 | Verbrennungsfluidbehälter |
| 31 | Erstes Verbrennungsfluidventil |
| 32 | Verbrennungsfluidleitung |
| 33 | Verdampfungsraum |
| 34 | Zweites Verbrennungsfluidventil |
| 40 | Abgasleitung |
| 41 | Abgasventil |
| 50 | Einrichtung zur Erzeugung von Verbrennungsfluid |
| 51 | Verbindungsleitung |
| 100 | Brennraum |
| A | Abgas |
| L | Längsachse |
| K | Kraftstoff |
| V | Verbrennungsfluid |

## Patentansprüche

1. Verfahren zum Betrieb eines Verbrennungsmotors (1), wobei
- in einem Brennraum (100) eines Verbrennungsmotors (1) ein Gemisch zwischen einem Kraftstoff (K) und einem Verbrennungsfluid (V) zur Verfügung gestellt wird, wobei der Kraftstoff (K) eine Kohlenstoffverbindung aufweist, und wobei
- das Gemisch in dem Brennraum (100) gezündet wird, so dass der Kraftstoff (K) zumindest teilweise verbrennt, und wobei
- der Verbrennungsmotor (1) durch bei der Verbrennung des Kraftstoffs (K) freigesetzte Energie angetrieben wird,
**dadurch gekennzeichnet,**
**dass** das Verbrennungsfluid (V) 70 Vol.-% Stickstoff (N₂) oder weniger aufweist.

2. Verfahren nach Anspruch 1, **dadurch gekennzeichnet, dass** mittels der bei der Verbrennung des Kraftstoffs freigesetzten Energie eine Welle des Verbrennungsmotors angetrieben wird.

3. Verfahren nach Anspruch 1 oder 2, **dadurch gekennzeichnet, dass** das Verbrennungsfluid (V) 50 Vol.-% Stickstoff (N₂) oder weniger aufweist.

4. Verfahren nach einem der vorhergehenden Ansprüche, **dadurch gekennzeichnet, dass** das Verbrennungsfluid (V) 30 Vol.-% Stickstoff (N₂) oder weniger aufweist.

5. Verfahren nach einem der vorhergehenden Ansprüche, **dadurch gekennzeichnet, dass** das Verbrennungsfluid (V) 10 Vol.-% Stickstoff (N₂) oder weniger, insbesondere 5 Vol.-% Stickstoff (N₂) oder weniger, aufweist.

6. Verfahren nach einem der vorhergehenden Ansprüche, **dadurch gekennzeichnet, dass** das Verbrennungsfluid (V) wenigstens 30 Vol.-% Sauerstoff (O₂) aufweist.

7. Verfahren nach einem der vorhergehenden Ansprüche, **dadurch gekennzeichnet, dass** das Verbrennungsfluid (V) wenigstens 50 Vol.-% Sauerstoff (O₂), insbesondere wenigstens 70 Vol.-% Sauerstoff (O₂), aufweist.

8. Verfahren nach einem der vorhergehenden Ansprüche, **dadurch gekennzeichnet, dass** das Verbrennungsfluid (V) wenigstens 90 Vol.-% Sauerstoff (O₂), insbesondere wenigstens 95 Vol.-% Sauerstoff (O₂), aufweist.

9. Verfahren nach einem der Ansprüche 1 bis 8, **dadurch gekennzeichnet, dass** das Verbrennungsfluid (V) reiner Sauerstoff (O₂) ist.

10. Verfahren nach einem der Ansprüche 1 bis 8, **dadurch gekennzeichnet, dass** das Verbrennungsfluid (V) durch ein Gemisch aus Luft und reinem Sauerstoff (O₂) gebildet ist.

11. Verfahren nach einem der vorhergehenden Ansprüche, **dadurch gekennzeichnet, dass** das Verbrennungsfluid (V) bei einem ersten Druck (p₁) gespeichert wird, wobei in dem Brennraum (100) beim Einleiten des Verbrennungsfluids (V) in den Brennraum (100) ein zweiter niedrigerer Druck (p₂) herrscht, wobei der zweite Druck (p₂) wenigstens 1,5 bar, insbesondere wenigstens 2,0 bar, beträgt, und wobei das Verbrennungsfluid (V) unter Ausnutzung der Differenz zwischen dem ersten Druck (p₁) und dem zweiten Druck (p₂) in den Brennraum (100) eingeleitet wird.

12. Verfahren nach einem der vorhergehenden Ansprüche, **dadurch gekennzeichnet, dass** das Verbrennungsfluid (V) in verflüssigter Form gespeichert wird, wobei das verflüssigte Verbrennungsfluid (V) zumindest teilweise verdampft, und wobei das verdampfte Verbrennungsfluid (V) in den Brennraum (100) eingeleitet wird.

13. Verfahren nach Anspruch 12, **dadurch gekennzeichnet, dass** der Verbrennungsmotor (1) mittels des verdampften Verbrennungsfluids (V) gekühlt wird.

14. Verfahren nach Anspruch 12 oder 13, **dadurch gekennzeichnet, dass** bei der Verbrennung des Kraftstoffs (K) in dem Brennraum (100) ein Abgas (A) erzeugt wird, wobei das Abgas (A) aus dem Brennraum (100) abgezogen wird, und wobei das Abgas (A) mittels des verdampften Verbrennungsfluids (V) gekühlt wird.

15. Verbrennungsmotor (1), insbesondere betreibbar mittels eines Verfahrens nach einem der Ansprüche 1 bis 14, wobei der Verbrennungsmotor (1) einen Brennraum (100) aufweist, **dadurch gekennzeichnet, dass** der Verbrennungsmotor (1) dazu ausgebildet ist, in dem Brennraum (100) ein Gemisch zwischen einem eine Kohlenstoffverbindung aufweisenden Kraftstoff (K) und einem 70 Vol.-% Stickstoff (N₂) oder weniger aufweisenden Verbrennungsfluid (V) zur Verfügung zu stellen, und das Gemisch in dem Brennraum (100) zu zünden, so dass der Kraftstoff (K) zumindest teilweise verbrennt, wobei der Verbrennungsmotor (1) dazu ausgebildet ist, durch bei der Verbrennung des Kraftstoffs (K) freigesetzte Energie angetrieben zu werden.
